# EUROPEAN PATENT APPLICATION

(11) **EP 0 712 128 A1**
(43) Date of publication of application: **15.05.1996**
(21) Application number: 94921835.8
(22) Date of filing: 29.07.1994
(51) Int. Cl.: G11B 21/02

(54) **MAGNETIC DISC DEVICE, AND METHOD FOR ASSEMBLING MAGNETIC HEAD SUPPORTING PART THEREIN**

(30) Priority: 30.07.1993 JP 208661/93
(71) Applicant: CITIZEN WATCH CO. LTD., Shinjuku-Ku Tokyo 163-04 (JP); Hewlett-Packard Company, Palo Alto, California 94304 (US)
(72) Inventor: TADA, Kozo Miyota Co., Ltd., Nagano 389-02 (JP)
(74) Representative: Prüfer, Lutz H., Dipl.-Phys.
(86) International application number: JP9401251
(87) International publication number: WO9504353

(57) **Abstract**

On the outer periphery of a holder (121) having an elastic flange part (121a), a head arm member (107) for supporting a magnetic head (106) and a thin-plate circuit connecting plate (122) are fitted. Concurrently, the head arm members (107) are fastened to the holder (121) by the pressure exerted by the holder (121) in a radial direction, and the circuit connecting plate (122) is fastened to the holder (121) by the elastic force exerted by the flange part (121a) between the head arm member (107) and the flange part (121a). Thereby, while high alignment accuracy is maintained, the circuit connecting plate can be manufactured at a low cost without the requirement of any strict machining accuracy.

## Description

### TECHNICAL FIELD

The present invention relates to a magnetic disk drive provided with magnetic disks supported for rotation and magnetic heads for writing information on and reading information from the magnetic disks, and a method of assembling the magnetic head support unit of the magnetic disk drive.

### BACKGROUND ART

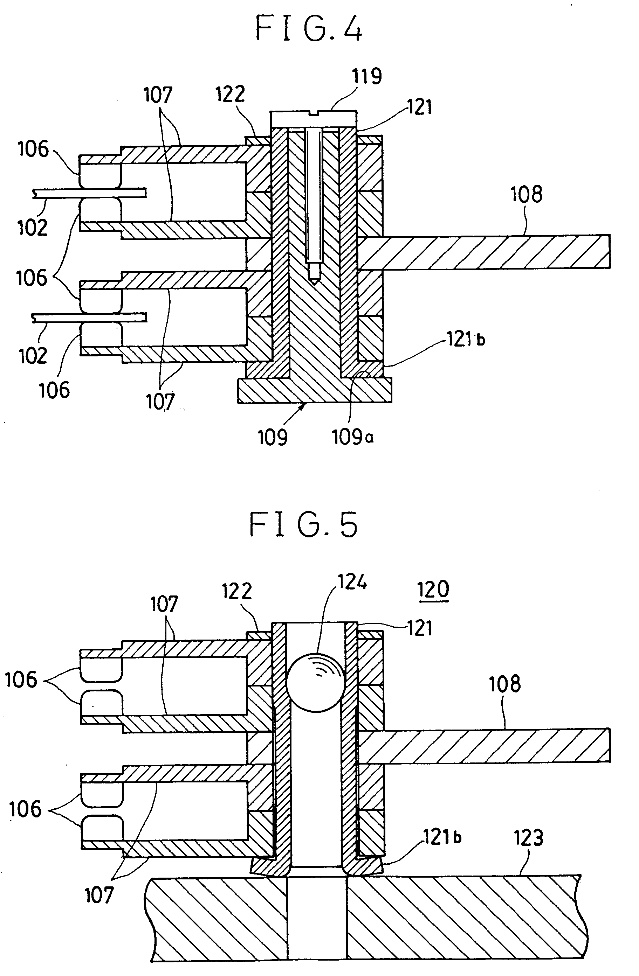

Fig. 4 shows a structure of magnetic head support unit included in a conventional magnetic disk drive.

Magnetic disks 102 each having recording surfaces on both sides are fixed to a spindle motor, not shown, and are driven for rotation at a set rotating speed by the spindle motor. Magnetic heads 106 write information on and read the recorded information from the corresponding recording surfaces, respectively. Each magnetic head 106 is supported on an elastic head support arm member 107 so as to be disposed close to the corresponding recording surface of the magnetic disk 102.

A coil support member 108 supports the coil of a voice coil motor, not shown, at one end thereof. The coil support member 108 transmits the torque of the voice coil motor to a holder 121, which will be described later.

A circuit connecting plate 122 connects signal lines extending from the magnetic heads 106 and power terminals connected to the coil of the voice coil motor to a control circuit board, not shown.

The holder 121, having a tubular shape, is provided with a flange 121b at its one end. The head support arm members 107, the coil support member 108 and the circuit connecting plate 122 are fixedly mounted on the holder 121. These members including the holder 121 form a holder assembly 120.

The holder assembly 120 is fastened to a pivot shaft 109 with a screw 119. The pivot shaft 109 has a datum surface 109a and the flange 121b of the holder is seated on the datum surface 109a to determine the vertical positions of the magnetic heads 106 accurately relative to the corresponding recording surfaces of the magnetic disks 102.

The holder assembly 120 is turned about the axis of the pivot shaft 109 by the torque of the voice coil motor transmitted thereto through the coil support member 108 to position the magnetic heads 106 at various diametrical positions on the magnetic disks 102.

A method of assembling the holder assembly 120 will be described with reference to Fig. 5.

Referring to Fig. 5, the holder 121 is set up with the flange 121b seated on a jig 123, and the head support arm members 107, the coil support member 108 and the circuit connecting plate 122 provided with holes at their base ends are mounted on the holder 121. The circuit connecting plate 122 is mounted last on the upper end, the end opposite to the end provided with the flange 121b, of the holder 121. Then, these members are fixed temporarily to the holder 121 with a temporary tightening jig, not shown.

Then, a hard spherical ball (swaging ball) 124 of a diameter greater than the inside diameter of the holder 121 is pressed through the upper end of the holder 121 into the bore of the holder 121 and is pressed out through the other end of the bore on the side of the flange 121b. Consequently, the outside diameter of the holder 121 is increased to join together the holder 121 and those members put on the holder 121 with an interference fit. Thus, those members are fastened to the holder 121.

This conventional assembling method, however, has the following problem.

When the head support arm members 107, the coil support member 108 and the circuit connecting plate 122 are fastened to the holder 121 by the aforesaid assembling method, the increase in the outside diameter of the holder 121 caused by the swaging effect of the hard spherical ball 124 is not very large. Therefore, the holes of these members must be formed with a high dimensional accuracy so that the clearances between these holes and the outer surface of the holder 121, i.e., the differences between the diameters of the holes and the outside diameter of the holder 121, are small.

Although the thin circuit connecting plate 122 can be formed by a press that produces parts at low machining costs, the connecting plate 122 must ther be accurately machined by a machine tool other than a press at high machining costs because the hole of the circuit connecting plate 122 must be formed in an accurate diameter for the aforesaid reasons.

Since the clearance between the outer diameter of the holder 121 and the hole of the circuit connecting plate 122 is small, there is the possibility that the circuit connecting plate 122 could be warped by scuffing when putting the circuit connecting plate 122 on the holder 121.

When writing information on or reading information from the magnetic disk 102, the magnetic head 106 is held at a height of about 0.1 µm or less from the recording surface of the magnetic disk 102 by balancing a lift generated by currents generated by the magnetic disk 102 rotating at a high rotating speed with the resilience of the head support arm member 107.

Therefore, the axial positions of the head support arm members 107 must be determined with a high accuracy. However, it is difficult to achieve a high positioning accuracy by the conventional technique which positions the head support arm members 107 by seating the flange 121b of the holder 121 on the datum surface 109a of the pivot shaft 109.

As shown in Fig. 4, a clearance is formed between the head support arm member 107 and the flange 121b when the hard spherical ball 124 is pressed into the bore of the holder 121, because the flange 121b of the holder 121 is axially pushed out slightly. Consequently, the flange 121b is liable to bend and it is therefore inappropriate to use the flange 121b as a reference part for positioning.

The present invention has been made to solve the aforesaid problems and it is therefore an object of the present invention to improve the positional accuracy of the magnetic heads relative to the recording surfaces of the magnetic disks and enable the thin circuit connecting plate to be manufactured at low manufacturing costs.

### DISCLOSURE OF THE INVENTION

A magnetic disk drive in one aspect of the present invention comprising magnetic disks supported for rotation, and magnetic heads for writing information on and reading information from the magnetic disks has the following features particularly in the construction of the magnetic head support unit.

A magnetic disk drive in one aspect of the present invention comprises: a pivot shaft disposed with its axis aligned with a center axis of turning of the magnetic heads; a holder, having a tubular shape, provided with an elastic flange at one axial end thereof and fixedly mounted on the pivot shaft; head support arm members supporting magnetic heads and provided with holes at their base ends to be put on the holder; and a circuit connecting plate for transferring signals to and from the magnetic heads, and provided with a hole to receive the holder therein.

The head support members are mounted on the holder with the holes thereof receiving the holder therein, and are fixed to the holder by a diametrical pressure. The circuit connecting plate is disposed between one of the head support arm members and the flange of the holder and is pressed against one of the head support arm members by the resilience of the flange.

Since the circuit connecting plate is held in place by the resilience of the elastic flange of the holder, the hole of the circuit connecting plate need not have a very accurate diameter and hence the circuit connecting plate can be manufactured quickly at low manufacturing costs by, for example, press working.

Since a comparatively large clearance may be formed between the outer circumference of the holder and the circumference of the hole of the circuit connecting plate, the circuit connecting plate will not be bent due to scuffing when mounting the circuit connecting plate on the holder.

As mentioned above, the magnetic heads must be positioned with a high accuracy relative to the corresponding magnetic disks. To position a magnetic head with a high accuracy relative to the corresponding magnetic disk, a magnetic head support unit in accordance with the present invention may comprise a pivot shaft disposed with its axis aligned with a center axis of turning of the magnetic head and having a positioning portion at a predetermined position on its circumference; a holder, having a tubular shape, and fixedly mounted on the pivot shaft; and, a head support arm member supporting the magnetic head, provided with a hole at one base end to be put on the holder, fixedly mounted on the pivot shaft, and axially positioned relative to the pivot shaft with a reference end surface thereof in contact with the positioning portion of the pivot shaft.

The magnetic head can be further accurately positioned relative to the corresponding magnetic disk by positioning the head support arm member by setting a reference end surface thereof in direct contact with the positioning portion of the pivot shaft.

The present invention includes a magnetic disk drive comprising a plurality of head support arm members supporting magnetic heads. Generally, a magnetic disk drive is provided with a plurality of built-in magnetic disks, and a plurality of magnetic heads corresponding to the recording surfaces of the plurality of magnetic disks. Therefore, it is preferable to mount head support arm members supporting magnetic heads fixedly on the holder in a number corresponding to the number of the recording surfaces of the magnetic disks.

When the magnetic head support unit is provided with a plurality of head support arm members, the head support arm members are mounted on the holder with the holes thereof receiving the holder therein, the head support arm members are fastened to the holder by a diametrical pressure, and the head support arm member disposed at one axial end of the holder is positioned in contact with the positioning portion of the pivot shaft to determine the axial positions of the head support arm members relative to the pivot shaft.

In another aspect of the present invention, a method of assembling a magnetic head support unit included in a magnetic disk drive comprising magnetic disks supported for rotation, magnetic heads for writing information on and reading information from the magnetic disks, a pivot shaft disposed with its axis aligned with a center axis of turning of the magnetic heads, a holder, having a tubular shape, provided with a flange at one axial end thereof, and head support arm members supporting magnetic heads and provided with holes at their base ends to be put on the holder is featured by the following steps:
(1) a step of mounting the head support arm members on the holder with their holes receiving the holder therein
(2) a step of pressing a hard spherical ball of a diameter greater than the inside diameter of the holder through one axial end of the holder provided with the flange into the bore of the holder, pushing the hard spherical ball through the bore of the holder and pushing out the hard spherical ball through the other end of the holder to expand the holder diametrically so that the head support arm members are fixed to the holder; and,
(3) a step of mounting the holder onto the pivot shaft with the reference end surface of one of the head support arm members in contact with the positioning portion for positioning and fixing the holder to the pivot shaft
Since this method positions the head support arm members by placing one of the head support arm members with its reference end surface in direct contact with the positioning portion of the pivot shaft for axial positioning, the magnetic heads supported on the head support arm members are further accurately positioned relative to the magnetic disks.

In a third aspect of the present invention, a method of assembling a magnetic head support unit included in a magnetic disk drive comprising magnetic disks supported for rotation, magnetic heads for writing information on and reading information from the magnetic disks, a pivot shaft disposed with its axis aligned with a center axis of turning of the magnetic heads, a holder, having a tubular shape, provided with an elastic flange at one axial end thereof, head support arm members supporting magnetic heads and provided with holes at their base ends to be put on the holder, and a circuit connecting plate provided with a hole to receive the holder therein, for transferring signals to and from the magnetic heads is featured by the following steps:
(1) a step of mounting the head support arm members and the circuit connecting plate on the holder with their holes receiving the holder therein so that the circuit connecting plate is in contact with the flange of the holder;
(2) a step of pressing a hard spherical ball of a diameter greater than the inside diameter of the holder through one axial end of the holder provided with the flange into the bore of the holder, pushing the hard spherical ball through the bore of the holder and pushing out the hard spherical ball through the other end of the holder to pull the flange axially so that the flange is pressed against the circuit connecting plate and to expand the holder diametrically so that the head support arm members are fixed to the holder; and,
(3) a step of mounting the holder fixedly holding the circuit connecting plate and the head support arm members onto the pivot shaft.

When the hard spherical ball is pressed through the end provided with the elastic flange into the bore of the holder by this method, the elastic flange is pulled axially and elastically deformed so as to be in close contact with the circuit connecting plate.

When the hard spherical ball is pushed through the bore of the holder and pushed out through the other end of the holder, the holder is diametrically expanded and the head support arm members are firmly fixed to the holder with an interference fit, which inhibits the holder from axial restoration to its original shape and, consequently, the elastic flange remains in contact with the circuit connecting plate in an elastically deformed state. Therefore, no clearance that could introduce errors into the positions of the magnetic heads is formed between the flange of the holder and the circuit connecting plate.

Preferably, the diameter of the hole of the circuit connecting plate is greater than the outside diameter of the holder in a state after the same has been expanded by forcibly pressing the hard spherical ball through the bore of the holder to secure a sufficiently large clearance between the outer circumference of the holder and the circumference of the hole of the circuit connecting plate, which prevents scuffing when mounting the circuit connecting plate on the holder. Since a clearance remains between the outer circumference of the holder and the circumference of the hole of the circuit connecting plate after the holder is expanded with the hard spherical ball, the elastic flange of the holder can be satisfactorily pulled for elastic deformation by pressing the hard spherical ball through the bore of the holder.

### BRIEF DESCRIPTION OF THE DRAWINGS

Fig. 1 is a sectional front view of a magnetic disk drive in a preferred embodiment according to the present invention;
Fig. 2 is a sectional front view of assistance in explaining a method of assembling a magnetic head support unit included in the magnetic disk drive of Fig. 1;
Fig. 3 is a sectional front view, similar to Fig. 2, of assistance in explaining the method of assembling the magnetic head support unit;
Fig. 4 is a sectional front view of a magnetic head support unit included in a conventional magnetic head drive; and
Fig. 5 is a sectional front view for assistance in explaining a method of assembling the magnetic head support unit of Fig. 4.

### BEST MODE FOR CARRYING OUT THE INVENTION

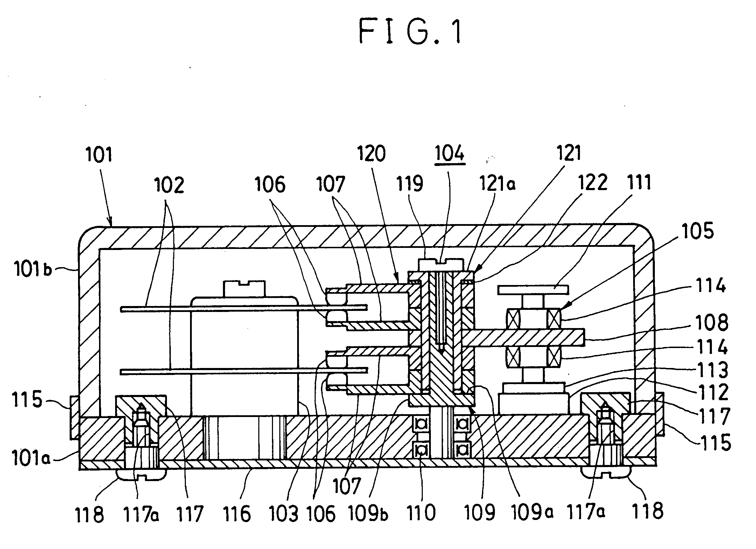

Preferred embodiments of the present invention will be described with reference to Figs. 1 to 3.

A magnetic disk drive embodying the present invention will be described with reference to Fig. 1.

Housed in a disk enclosure 103 comprising a base 101a and a cover 101b are a plurality of magnetic disks 102 (two magnetic disks in Fig. 1) each having recording surfaces on both sides, a spindle motor 103 for supporting the magnetic disks 102 and rotating the same at a set rotating speed, a magnetic head support unit 104, and a voice coil motor 105. These components are installed on the base 101a.

The base 101a and the cover 101b are firmly joined together and the joint between the base 101a and the cover 101b is sealed perfectly with, for example, an adhesive tape 115 to keep the interior of the disk enclosure clean.

A control circuit for controlling the spindle motor 103 and the voice coil motor 105, and a signal processing circuit associated with magnetic heads 106 are formed on a circuit board 116. The circuit board 116 is fastened to the outer surface of the base 101a with shoulder screws 118 screwed in threaded holes 117a formed in a sealing member 117. The sealing member 117 seals the interior of the disk enclosure 103 to inhibit dust from entering the disk enclosure 103.

The plurality of magnetic disks 102 are spaced a set interval apart and are clamped down on the spindle motor 103. The magnetic disks 102 are rotated at a set rotating speed.

The magnetic head support unit 104 comprises bearings 110 fixedly fitted in a hole formed in the base 101a, a pivot shaft 109 supported in the bearings 110, and a holder assembly 120 mounted on and fixed to the pivot shaft 109 with a screw 119.

Each magnetic head 106 is supported on the free end of a head support arm member 107 so as to be located opposite to a variable radial position on the recording surface of the magnetic disk 102. Each magnetic head 106 is kept floating at an appropriate height from the surface of the magnetic disk 102 for information writing and reading by the balance of a lift produced by air currents produced by the rotating magnetic disk 102 and the resilience of the head support arm member 107. Therefore, the head support arm members 107 must be accurately positioned with respect to the direction of the axis of the pivot shaft 109 relative to the recording surfaces of the magnetic disks 102.

The pivot shaft 109 is supported in the bearings 110 on the base 101a. The pivot shaft 109 is provided with a positioning flange 109b, and the upper surface of the positioning flange 109b is positioned with a high accuracy with respect to the axial direction relative to the recording surfaces of the magnetic disks 102 and serves as a datum surface 109a.

The holder assembly 120 comprises a holder 121, the magnetic heads 106, the head support arm members 107, a coil support member 108, and a circuit connecting plate 122.

The holder 121 has a tubular shape and is provided at one end thereof with an elastic flange 121a. The axial length of the barrel portion of the holder 121 on which the head support arm members 107, the coil support member 108 and the circuit connecting plate 122 are put is smaller than the sum of the thicknesses of portions of those components on the barrel portion.

The magnetic heads 106 are attached to the free ends of the head support arm members 107, respectively. The head support arm members 107 are provided with holes in their base ends, respectively, to receive the holder 121 therein. The base ends of the head support arm members 107 are fixed to the holder 121 by a method which will be described later.

The coil support member 108 supports the coil 114 of the voice coil motor 105, and its base end provided with a hole is put on the holder 121 and fixed to the holder 121 by a method which will be described later. The circuit connecting plate 122 is a thin plate provided with a hole and is used for connecting signal lines connected to the magnetic heads 106 and the supply terminals of the coil 114 to the circuit board 116. The circuit connecting plate 122 is put on the holder 121 so as to receive the holder in its hole and is fixed to the holder 121 by a method which will be described later. The circuit connecting plate 122 is held fixedly between the elastic flange 121a of the holder 121 and the uppermost head support arm member 107 by the resilience of the elastic flange 121a. The circuit connecting plate 122 can be made by inexpensive working , such as press working.

The voice coil motor 105 comprises the coil 114, an upper yoke 111, a lower yoke 112 and a permanent magnet 113. A magnetic force produced by the coil 114 when the coil 114 is energized acts on the coil support member 108 supporting the coil 114 to turn the coil support member 108 on the pivot shaft 109. Consequently, the holder assembly 120 is turned on the pivot shaft 109 together with the coil support member 108 to position the magnetic heads 106 at a desired radial position relative to the corresponding recording surfaces of the magnetic disks 102.

Since the lowermost head support arm member 107 of the holder assembly 120 is in direct contact with the datum surface 109 of the pivot shaft 109, the magnetic heads 106 can be easily positioned with a high accuracy relative to the recording surfaces of the magnetic disks 102 provided that the base ends of the parts put on the holder 121 are formed with accurate thicknesses.

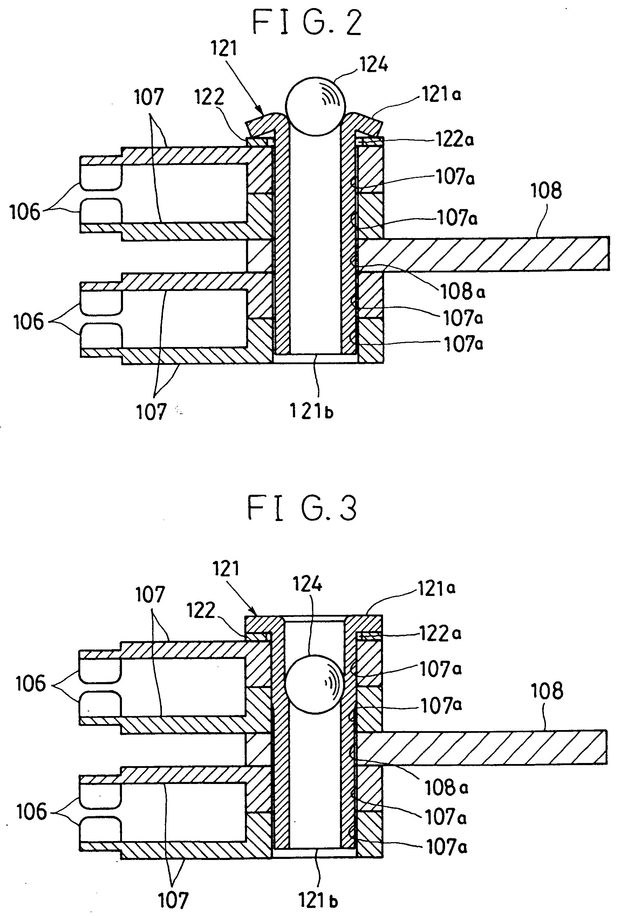

A method of assembling the magnetic head support unit of the foregoing magnetic disk drive will be described mainly with reference to Figs. 2 and 3.

A hard spherical ball (swaging ball) 124 of a diameter slightly greater than the inside diameter of the holder 121 is used for assembling the magnetic head support unit.

The diameters of the holes 107a of the head support arm members 107 and the hole 108a of the coil support member 108 are slightly greater than the outside diameter of the holder 121, and the diameter of the hole of the circuit connecting plate 122 is greater than the outside diameter of the holder 121 after it has been diametrically expanded.

Referring to Fig. 2, the circuit connecting plate 122, the upper two head support arm members 107, the coil support member 108 and the lower two head support arm members 107 are put on the holder 121 in that order from the end 121b of the holder 121 not provided with the elastic flange 121a. Since the hole 122a of the circuit connecting plate 122 is formed in a diameter greater than the outside diameter of holder 121 so that a clearance large enough to prevent scuffing is formed between the circuit connecting plate 122 and the holder 121, the circuit connecting plate 122 can be smoothly put on the holder 121 without being bent.

The magnetic heads 106 supported on two adjacent head support arm members 107 are fixed to the extremities of those head support arm members 107 so as to face opposite to each other, as shown in Fig. 2 and 3.

When those components are put on the holder 121 in the aforesaid order, the circuit connecting plate 122 is disposed between the elastic flange 121a and the uppermost head support arm member 107.

After those components are thus put on the holder 121, those components and the holder 121 are fixed temporarily with a fixing jig, not shown.

Then, the hard spherical ball 124 is pressed into the bore of the holder 121 through the end provided with the elastic flange 121a. Consequently, the holder 121 is pulled axially in the direction of pressing the hard spherical ball 124 and the elastic flange 121a is elastically deformed so as to be closely pressed against the circuit connecting plate 122 as shown in Fig. 3.

Since the diameter of the hole of the circuit connecting plate 122 is greater than the outside diameter of the holder 121, the circuit connecting plate 122 is not joined to the holder 121 with an interference fit even if the holder 121 is diametrically expanded. Therefore, the elastic flange 121a can be axially pulled for satisfactory elastic deformation in the initial stage of pressing the hard spherical ball 124 into the bore of the holder 121.

As the hard spherical ball 124 is further pressed into the hole of the holder 121, the outside diameter of portions of the holder 121 through which the hard spherical ball 124 has passed is increased so that the outer circumference of the holder 121 is brought into close contact with the circumferences of the holes 107a of the head support arm members 107 as shown in Fig. 3 to fasten the head support arm members 107 to the holder 121 with an interference fit.

In this state, the circuit connecting plate 122 is held fixedly between the elastic flange 121a and the uppermost head arm support member 107 by the resilience of the elastic flange 121a.

The hard spherical ball 124 is pushed out of the bore of the holder 121 through the other end opposite to the end provided with the elastic flange 121a.

The holder 121 of the holder assembly 120 thus assembled is mounted on the pivot shaft 109 so that the pivot shaft 109 is received in the hole of the holder 121 from the end opposite to the end provided with the elastic flange 121a and is fastened to the pivot shaft 109 with a screw 119. In this state, the lowermost head support arm member 107 is in direct contact with the datum surface 109a of the pivot shaft 109. Therefore, the magnetic heads 106 can be easily positioned in a high accuracy relative to the recording surfaces of the magnetic disks 102 provided that the base ends of the parts put on the holder 121 are formed in accurate thicknesses.

### CAPABILITY OF EXPLOITATION IN INDUSTRY

The present invention is applicable to a magnetic disk drive comprising magnetic disks supported for rotation, and magnetic heads for writing information on and reading recorded information from the magnetic disks. The present invention improves the positional accuracy of the magnetic heads relative to the recording surfaces of the magnetic disks and enables the manufacture of a thin circuit connecting plate at low manufacturing costs.

## Claims

1. A magnetic disk drive comprising at least one magnetic disk supported for rotation and at least one magnetic head for writing information on and reading recorded information from the magnetic disk, characterized by:
a pivot shaft disposed with on axis thereof aligned with an axis of turning of the magnetic head;
a holder, having a tubular shape, provided with an elastic flange at one axial end thereof and fixedly mounted on the pivot shaft;
at least one head support arm member supporting the magnetic head at a free end thereof and having a base end provided with a hole to receive the holder therethrough; and
a circuit connecting plate for transferring signals to and from the magnetic head, provided with a hole to receive the holder therethrough;
the head support arm member being mounted on the holder by inserting the holder through the hole formed in the base end of the head support arm member and being fastened to the holder by a diametrical pressure acting thereon;
the circuit connecting plate being clamped between the elastic flange of the holder and the head support arm member by the resilience of the elastic flange.

2. A magnetic disk drive comprising at least one magnetic disk supported for rotation and at least one magnetic head for writing information on and reading recorded information from the magnetic disk characterized by:
a pivot shaft disposed with an axis thereof aligned with an axis of turning of the magnetic head, and provided with a positioning portion at a predetermined position thereon;
a holder, having a tubular shape fixedly mounted on the pivot shaft; and
at least one head support arm member supporting the magnetic head at a free end thereof and having a base end provided with a hole to receive the holder therethrough;
the head support arm member being fixedly mounted on the holder, and the axial position of the head support arm member relative to the pivot shaft being determined by positioning one axial end surface of the head support arm member in contact with the positioning portion of the pivot shaft.

3. A magnetic disk drive according to claim 1, comprising a plurality of head support arm members, the plurality of head support arm members having base ends provided with holes, respectively, the head support arm members being mounted on the holder with the holes of the base ends thereof receiving the holder therethrough and fastened to the holder by a diametrical pressure, one axial end surface of one of the plurality of head support arm members fastened to the holder, disposed at one axial end of the holder, being in contact with the positioning portion of the pivot shaft to position the head support arm members axially relative to the pivot shaft.

4. A method of assembling a magnetic head support unit included in a magnetic disk drive comprising magnetic disks supported for rotation, magnetic heads for writing information on and reading recorded information from the magnetic disks, a pivot shaft disposed with an axis thereof aligned with an axis of turning of the magnetic heads, a holder, having a tubular shape provided with a flange at one axial end thereof, head support arm members supporting the magnetic heads at their free ends and having base ends provided with holes to receive the holder therethrough, respectively; said method comprising the steps of:
mounting the head support arm members onto the holder by inserting the holder through the holes formed in the base ends of the head support arm members;
fastening the head support arm members to the holder by pressing a hard spherical ball having a diameter greater than the inside diameter of the holder into the bore of the holder through one end of the holder provided with the flange and passing the hard spherical ball through the bore of the holder to expand the holder diametrically;
mounting the holder on the pivot shaft with one axial end surface of one of the head support arm members in contact with the positioning portion of the pivot shaft so that the holder is positioned axially relative to the pivot shaft; and
fastening the holder to the pivot shaft.

5. A method of assembling a magnetic head support unit included in a magnetic disk drive comprising magnetic disks supported for rotation, magnetic heads for writing information on and reading recorded information from the magnetic disk, a pivot shaft disposed with its axis aligned with an axis of turning of the magnetic heads, a holder, having a tubular shape, provided with an elastic flange at one axial end thereof, head support arm members supporting the magnetic heads at their free ends and having base ends provided with holes to receive the holder therethrough, respectively, and a circuit connecting plate for transferring signals to and from the magnetic heads, provided with a hole to receive the holder therethrough; said method comprising the steps of:
mounting the circuit connecting plate and the head support arm members onto the holder by inserting the holder through the holes formed in the circuit connecting plate and the base ends of the head support arm members so that the circuit connecting plate is contiguous with the elastic flange of the holder;
fastening the circuit connecting plate and the head support arm members to the holder by pressing a hard spherical ball having a diameter greater than the inside diameter of the holder into the bore of the holder through one end of the holder provided with the flange and passing the hard spherical ball through the bore of the holder to pull the flange of the holder axially so that the flange is pressed against the circuit connecting plate to expand the holder diametrically; and
fixedly mounting the holder fixedly holding the circuit connecting plate and the head support arm members onto the pivot shaft.
